# EUROPEAN PATENT APPLICATION

(11) **EP 3 239 858 A1**
(43) Date of publication of application: **01.11.2017**
(21) Application number: 17157558.2
(22) Date of filing: 23.02.2017
(51) Int. Cl.: G06F 17/30

(54) **METHOD AND APPARATUS FOR SEARCHING RESOURCE**

(30) Priority: 27.04.2016 CN 201610274210
(71) Applicant: Beijing Xiaomi Mobile Software Co., Ltd., Beijing 100085 (CN)
(72) Inventor: LIU, Ming, Beijing, 100085 (CN); WANG, Le, Beijing, 100085 (CN); HOU, Wendi, Beijng, 100085 (CN); ZHONG, Chen, Beijing, 100085 (CN); WANG, Fuye, Beijing, 100085 (CN)
(74) Representative: Hughes, Andrea Michelle

(57) **Abstract**

The present disclosure provides a method and apparatus for searching a resource, belonging to the technical field of computer. The method includes: receiving (201, 301) at least one search character inputinput by a user when an input program is called by an application program running in a foreground in a terminal; sending (202) the at least one search character to a server, the server being configured for selecting (204) relevant information of a resource matched with the at least one search character from a resource base, and sending (205) the relevant information to the input program.

## Description

### TECHNICAL FIELD

The present disclosure generally relates to the technical field of computers, and more particularly, to a method and apparatus for searching a resource.

### BACKGROUND

The user may input characters in a search bar provided by an application program in a terminal, so as to search relevant resources in this application program, for example, the user inputs characters in a search bar of an application store to search an application program, inputs characters in a search bar of a music application program to search for music, and inputs characters in a video application program to search for a video.

### SUMMARY

In order to solve the problems in the prior art, the present disclosure provides a method and apparatus for searching a resource.

According to a first aspect of embodiments of the present disclosure, there is provided a method for searching a resource, applied in an input program, wherein the method includes:
receiving at least one search character input by a user when an input program is called by an application program running in a foreground in a terminal;
sending the at least one search character to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource; and
receiving and providing the relevant information to the user.

Receiving and providing the relevant information to the user may include: receiving the relevant information; and
displaying the relevant information in an interface of the input program.

Displaying the relevant information in the interface of the input program may include:
displaying the relevant information in an adjacent area of a candidate word generated by the input program according to the at least one search character, the relevant information including at least a name of the resource and an address of the resource.

The method may further include:
when the relevant information includes the address of the resource, detecting whether a first operation instruction generated by triggering the address by the user is received; and
when the first operation instruction is received, sending a resource acquiring request carrying the address to the server, the resource acquiring request being configured for requesting the resource from the server.

The method may further include:
when an input control is also displayed in a display area of the relevant information, detecting whether a second operation instruction generated by triggering the input control by the user is received; and
when the second operation instruction is received, updating the at least one search character by using the name of the resource.

The method may further include:
when relevant information of at least two resources are received, receiving the relevant information of respective resources which have been ranked, and displaying respective relevant information in turn according to the ranked order, the ranked order being obtained by ranking respective relevant information via the server according to an order of matching degrees between the names of respective resources and the at least one search character from high to low.

The method may further include:
acquiring an identification of the application program calling the input program; and
sending the identification to the server, the server being configured for selecting a resource base corresponding to the identification from at least one resource base, and selecting the relevant information matched with the at least one search character from the selected resource base.

According to a second aspect of the embodiments of the present disclosure, there is provided a method for searching a resource, applied in a server, wherein the method includes:
receiving at least one search character sent by an input program, the at least one search character being received when the input program is called by an application program running in a foreground in a terminal;
selecting relevant information of a resource matched with the at least one search character from a resource base, the resource base being configured for storing the resource and the relevant information of the resource, and the relevant information being configured for a user to identify and acquire the resource; and
sending the relevant information to the input program, the input program being configured for providing the relevant information to the user.

Selecting relevant information of the resource matched with the at least one search character from a resource base may include:
receiving an identification of the application program calling the input program sent by the input program;
selecting a resource base corresponding to the identification from the at least one resource base; and
selecting the relevant information matched with the at least one search character from the selected resource base.

The method may further include:
when there is no relevant information matched with the at least one search character in the selected resource base, determining a resource base corresponding to another application program which belongs to the same type as this application program according to the identification; and
selecting the relevant information matched with the at least one search character from the determined resource base.

The method may further include:
detecting whether a resource acquiring request sent by the input program is received, the resource acquiring request being generated by triggering an address of the resource displayed in an interface of the input program by the user of the input program, the resource acquiring request being configured for requesting the resource from the server;
when the resource acquiring request is received, determining a resource base corresponding to the address; and
when the resource base is the resource base corresponding to the application program calling the input program, sending the resource to the application program calling the input program; and when the resource base is the resource base corresponding to another application program, sending the resource to the other application program.

Sending the relevant information to the input program may include:
when selecting the relevant information of at least two resources, ranking respective relevant information according to an order of matching degrees between names of respective resources and the at least one search character from high to low; and
sending the respective relevant information to the input program according to the ranked order.

According to a third aspect of the embodiments of the present disclosure, there is provided an apparatus for searching a resource, applied in an input program, wherein the apparatus includes:
a receiving module configured to receive at least one search character input by a user when the input program is called by an application program running in a foreground in a terminal;
a first sending module configured to send the at least one search character received by the receiving module to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource; and
a providing module configured to receive and provide the relevant information to the user.

The providing module may include:
a receiving submodule configured to receive the relevant information; and
a displaying submodule configured to display the relevant information received by the receiving submodule in an interface of the input program.

The displaying submodule may further be configured to:
display the relevant information in an adjacent area of a candidate word generated by the input program according to the at least one search character, the relevant information including at least a name of the resource and an address of the resource.

The apparatus may further include:
a first detecting module configured to, when the relevant information includes the address of the resource, detect whether a first operation instruction generated by triggering the address by the user is received; and
a second sending module configured to, when the first detecting module detects that the first operation instruction is received, send a resource acquiring request carrying the address to the server, the resource acquiring request being configured for requesting the resource from the server.

The apparatus may further include:
a second detecting module configured to, when an input control is also displayed in a display area of the relevant information, detect whether a second operation instruction generated by triggering the input control by the user is received; and
a character updating module configured to, when the second detecting module detects that the second operation instruction is received, update the at least one search character by using the name of the resource.

The displaying submodule may further be configured to: when relevant information of at least two resources are received, receive the relevant information of respective resources which have been ranked, and display respective relevant information in turn according to the ranked order, the ranked order being obtained by ranking respective relevant information via the server according to an order of matching degrees between the names of respective resources and the at least one search character from high to low.

The apparatus may further include:
an acquiring module configured to acquire an identification of the application program calling the input program; and
a third sending module configured to send the identification acquired by the acquiring module to the server, the server being configured for selecting a resource base corresponding to the identification from at least one resource base, and selecting the relevant information matched with the at least one search character from the selected resource base.

According to a fourth aspect of the embodiments of the present disclosure, there is provided an apparatus for searching a resource, applied in a server, wherein the apparatus includes:
a receiving module configured to receive at least one search character sent by an input program, the at least one search character being received when the input program is called by an application program running in a foreground in a terminal;
a first selecting module configured to select relevant information of a resource matched with the at least one search character received by the receiving module from a resource base, the resource base being configured for storing the resource and the relevant information of the resource, and the relevant information being configured for a user to identify and acquire the resource; and
a first sending module configured to send the relevant information selected by the first selecting module to the input program, the input program being configured for providing the relevant information to the user.

The first selecting module may include:
a receiving submodule configured to receive an identification of the application program calling the input program sent by the input program;
a first selecting submodule configured to select a resource base corresponding to the identification received by the receiving submodule from the at least one resource base; and
a second selecting submodule configured to select the relevant information matched with the at least one search character from the resource base selected by the first selecting submodule.

The apparatus may further include:
a first determining module configured to, when there is no relevant information matched with the at least one search character in the selected resource base, determine a resource base corresponding to another application program which belongs to the same type with this application program according to the identification; and
a second selecting module configured to select the relevant information matched with the at least one search character from the resource base determined by the first determining module.

The apparatus may further include:
a detecting module configured to detect whether a resource acquiring request sent by the input program is received, the resource acquiring request being generated by triggering an address of the resource displayed in an interface of the input program by the user of the input program, the resource acquiring request being configured for requesting the resource from the server;
a second determining module configured to, when the detecting module detects that the resource acquiring request is received, determine a resource base corresponding to the address; and
a second sending module configured to, when the resource base determined by the second determining module is the resource base corresponding to the application program calling the input program, send the resource to the application program calling the input program; and when the resource base is the resource base corresponding to another application program, send the resource to the other application program.

The first sending module may include:
a ranking submodule configured to, when selecting the relevant information of at least two resources, rank respective relevant information according to an order of matching degrees between names of respective resources and the at least one search character from high to low; and
a sending submodule configured to send the respective relevant information to the input program according to the order ranked by the ranking submodule.

According to a fifth aspect of the embodiments of the present disclosure, there is provided an apparatus for searching a resource, including:
a processor; and
a memory for storing instructions executable by the processor;
wherein the processor is configured to:
   receive at least one search character input by a user when an input program is called by an application program running in a foreground in a terminal;
   send the at least one search character to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource; and receive and provide the relevant information to the user.

According to a sixth aspect of the embodiments of the present disclosure, there is provided an apparatus for searching a resource, including:
a processor; and
a memory for storing instructions executable by the processor;
wherein the processor is configured to:
   receive at least one search character sent by an input program, the at least one search character being received when the input program is called by an application program running in a foreground in a terminal;
   select relevant information of a resource matched with the at least one search character from a resource base, the resource base being configured for storing the resource and the relevant information of the resource, and the relevant information being configured for a user to identify and acquire the resource; and
   send the relevant information to the input program, the input program being configured for providing the relevant information to the user.

The technical solutions provided by the embodiments of the present disclosure may have the following beneficial effects.

By receiving at least one search character inputby a user when an input program is called by an application program running in a foreground in a terminal; selecting by the server relevant information of a resource matched with the at least one search character from a resource base, and receiving and providing the relevant information to the user, the user can find the resource needing to be searched by only inputting at least one search character when searching resources, without inputting a complete name of the resource needing to be searched in a search bar of the application program, which solves the problem of low resource searching efficiency that results in systems in which, only when the user inputs a complete name of the resource in a search bar of the application program, does the server send the resource matched with the name to the application program, and achieves the effect of improving the resource searching efficiency.

In addition, by displaying the relevant information in an adjacent area of a candidate word, the user can conveniently process the relevant information.

In addition, by acquiring an identification of the application program calling the input program and sending the identification to the server, it is unnecessary for the server to search the relevant information of the resource from all the resource bases, instead, the server only needs to select the resource base corresponding to the identification from the at least one resource base, and select the relevant information matched with the search character from the selected resource base, which reduces the resource consumed by searching the relevant information matched with the search character via the server.

In addition, by ranking the resources matched with the search character according to the matching degrees via the server, and displaying the respective relevant information according to the ranked order via the input program, since the larger the matching degree with the search character is, the larger the possibility that the resource is the resource searched by the user is, the accuracy of displaying the relevant information can be improved by giving priority to displaying the relevant information of the resource having a higher matching degree.

In addition, when there is no relevant information matched with the search character in the selected resource base, a resource base corresponding to another application program which belongs to the same type with this application program is determined according to the identification; and the relevant information matched with the search character is selected from the determined resource base, in this way, when there is no resource searched by the user in the resource base corresponding to the application program calling the input program, a resource base corresponding to another application program of the same type may be searched, which solves the problem of the server not looping up the relevant information of the resource when there is no resource searched by the user in the resource base corresponding to the application program calling the input program, and achieves the effects of searching the resources cross platform and thus providing more resources to the user.

The present invention also provides a computer program, which when executing on a processor of a terminal or a server, performs the above methods.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a system structure diagram illustrating a method for searching a resource, according to an exemplary embodiment of the present disclosure.
Fig. 2 is a flow chart of a method for searching a resource, according to an exemplary embodiment of the present disclosure.
Fig. 3A is a flow chart of a method for searching a resource, according to another exemplary embodiment of the present disclosure.
Fig. 3B is a schematic diagram where an input program displays relevant information, according to another exemplary embodiment of the present disclosure.
Fig. 3C is a schematic diagram where another input program displays relevant information, according to another exemplary embodiment of the present disclosure.
Fig. 4 is a block diagram illustrating an apparatus for searching a resource, according to an exemplary embodiment of the present disclosure.
Fig. 5 is a block diagram illustrating an apparatus for searching a resource, according to another exemplary embodiment of the present disclosure.
Fig. 6 is a block diagram illustrating an apparatus for searching a resource, according to an exemplary embodiment of the present disclosure.
Fig. 7 is a block diagram illustrating an apparatus for searching a resource, according to another exemplary embodiment of the present disclosure.
Fig. 8 is a block diagram illustrating an apparatus suitable for searching a resource, according to an exemplary embodiment of the present disclosure.
Fig. 9 is a block diagram illustrating an apparatus suitable for searching a resource, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

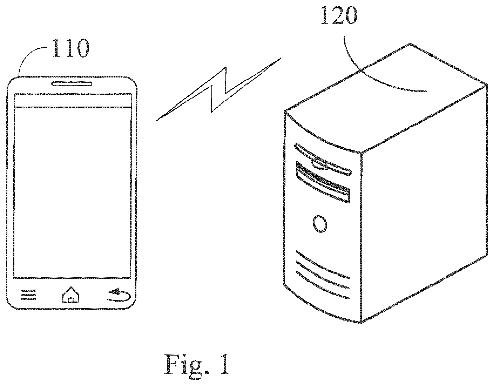

Fig. 1 is a structure diagram illustrating a system for searching a resource, according to an exemplary embodiment of the present disclosure. As shown in Fig. 1, the system includes a terminal 110 and a server 120.

The terminal 110 is installed with an input program, and the input program is used for a user to input a character in the terminal 110. The terminal 110 may be a device installing with an input program, such as a mobile phone, a tablet, and a personal computer (PC). The type of terminal is not limited by the present embodiment.

The server 120 is communicated with the terminal 110 via a communication network, and the communication network may be a wireless network or a wired network. The communication network is not limited by the present disclosure.

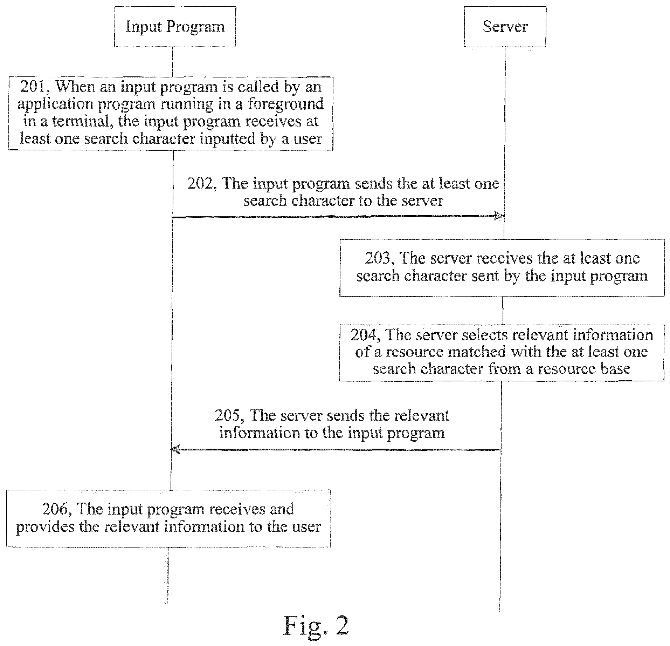

Fig. 2 is a flow chart of a method for searching a resource, according to an exemplary embodiment of the present disclosure. The method for searching a resource is applied in the above system for searching a resource. As shown in Fig. 2, the method for searching a resource includes the following steps.

In step 201, when an input program is called by an application program running in a foreground in a terminal, the input program receives at least one search character input by a user.

In step 202, the input program sends the at least one search character to a server.

In step 203, the server receives the at least one search character sent by the input program.

In step 204, the server selects relevant information of a resource matched with the at least one search character from a resource base.

The resource base is used for storing the resource and the relevant information of the resource, and the relevant information is used for the user to identify and acquire the resource.

In step 205, the server sends the relevant information to the input program.

In step 206, the input program receives and provides the relevant information to the user.

The step 201, the step 202 and the step 206 may be separately implemented as the method embodiment at the input program side, and the step 203 to the step 205 may be separately implemented as the method embodiment at the server side, which is not limited by the present embodiment.

In sum, in the method for searching a resource provided by the present disclosure, by receiving at least one search character input by a user when an input program is called by an application program running in a foreground in a terminal; selecting by the server relevant information of a resource matched with the at least one search character from a resource base, and receiving and providing the relevant information to the user, the user can find the resource needing to be searched by only inputting at least one search character when searching resources, without inputting a complete name of the resource needing to be searched in a search bar of the application program. This solves the problem of low resource searching efficiency found in systems in which, only when the user inputs a complete name of the resource in a search bar of the application program, does the server send the resource matched with the name to the application program, and achieves the effect of improving the resource searching efficiency.

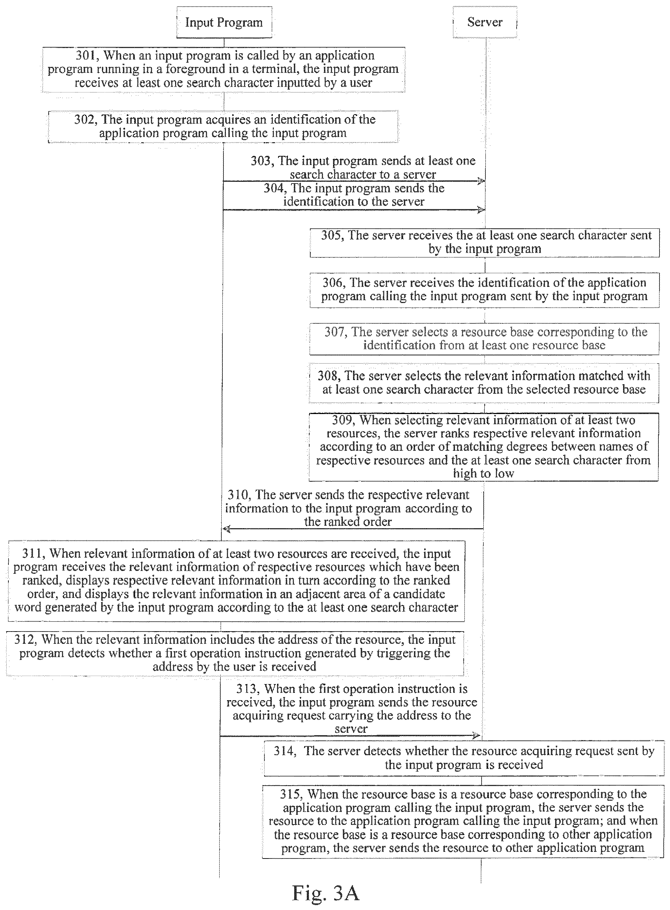

Fig. 3A is a flow chart of a method for searching a resource, according to another exemplary embodiment of the present disclosure. The method for searching a resource is applied in a terminal. As shown in Fig. 3A, the method for searching a resource includes the following steps.

In step 301, when an input program is called by an application program running in a foreground in a terminal, the input program receives at least one search character input by a user.

When searching a resource by an application program in the terminal, at first, the user needs to open the application program and enables the application program to run in the foreground, then the user executes a triggering operation in a search box of the application program, and after receiving the triggering operation, the application program is aware that the user needs to search the resource, at this time, by calling the input program, the user may input at least one search character via the input program, and accordingly, the input program receives the at least one search character.

Alternatively, after opening the application program, the user may not execute the triggering operation, instead, the application program directly calls the input program, and then the user inputs at least one search character in the input program. This is not limited by the present embodiment.

The input program is a program installed in the terminal for the user to input characters in the terminal, and may be an input method. The input program provides at least two ways of providing input, such as a 9-key number manner and a 26-key letter manner. This input method is not limited by the present embodiment.

The search character is used for generating a search letter, or a search word. When the user sets the method of input of the input program to be the 9-key number method, the form of the search character is figure; and when the user sets the input of the input program to be the 26-key letter, the form of the search character is letter.

For example, when the user desires to search an application program in an application store, after the application store is opened, the user executes a click operation in a search box of the application store, at this time, the application store calls an input program, then the user sets the input of the input program to be the 9-key figure input, at this time, the at least one search character inputinput by the user is at least one figure, and then the input program receives the at least one figure.

In step 302, the input program acquires an identification of the application program calling the input program.

The identification of the application program is used for uniquely identifying the application program. In actual implementations, the identification may be a package name of the application program, which is not limited by the present embodiment.

The present step may be executed before the step 301, or may be executed after the step 301, or may be executed simultaneously with the step 301. In the present embodiment, the timing of acquiring the identification of the application program is not limited.

In step 303, the input program sends at least one search character to a server.

In step 304, the input program sends the identification to the server.

This step may be executed before the step 303, or may be executed after the step 303, or may be executed simultaneously with the step 303. This is not limited by the present embodiment.

In step 305, the server receives the at least one search character sent by the input program.

In step 306, the server receives the identification of the application program calling the input program sent by the input program.

This step may be executed before the step 305, or may be executed after the step 305, or may be executed simultaneously with the step 305, which is not limited by the present embodiment.

In step 307, the server selects a resource base corresponding to the identification from at least one resource base.

The resource base is used for storing a resource and relevant information of the resource, and the relevant information is used for the user to identify and acquire the resource. The relevant information includes at least a name of the resource and an address of the resource. The address of the resource may include a download address of the resource and an address of the resource base to which the resource belongs. The download address of the resource is used for providing an entrance for the user to download the resource. The address of the resource base to which the resource belongs is used for notifying the user of the application program corresponding to the resource base to which the resource belongs.

It should be noted that, if the user searches the resource in a browser, the address of the resource is a link of the searched result. In this case, when the user triggers the link, the browser displays the searched result in a current display interface.

The relevant information may further include an icon of the resource, a size of the resource, and the like. This is not limited by the present embodiment.

After receiving the at least one search character by the server, in one possible implementation, the server stores at least one resource base therein, after receiving the at least one search character, the server searches relevant information of the resource matched with the at least one search character from all the resource bases. At this time, since the server needs to traverse all the resource bases, the search speed is slow.

In another possible implementation, the server pre-stores a corresponding relationship between respective resource bases and the identifications of the application programs. After receiving the identification of the application program, the server selects a resource base corresponding to the identification of the application program according to the corresponding relationship, and searches the relevant information of the resource matched with the at least one search character from the selected resource base. At this time, the server only needs to traverse one resource base, which improves a speed of searching the resource.

For example, the corresponding relationship pre-stored in the server is as shown in the following Table 1, and the identification of the application program received by the server is *xxshangdian1,* then the server selects relevant information of the resource matched with the search character from the resource base 1. At this time, it is unnecessary for the server to select the relevant information from all the resource bases, which improves a speed of searching the resource.

**Table 1**

| Identification of application program | Resource base |
|---|---|
| xxshangdian1 | Resource base 1 |
| xxshangdian2 | Resource base 2 |
| xxshipin | Resource base 3 |
| xxyinyue | Resource base 4 |
| xxliulanqi | Resource base 5 |

In step 308, the server selects the relevant information matched with at least one search character from the selected resource base.

Before selecting the relevant information matched with the at least one search character from the selected resource base, the server encodes the names of the stored resources according to a form of search character in advance, i.e., when the form of the search character is a number, the names of the resource are encoded according to an input sequence in the 9-key number input method; and when the form of the search character is a letter, the names of the resource are encoded according to an input sequence in the 26-key letter method. The server selects the encoded relevant information with a prefix matched with the at least one search character from the selected resource base.

For example, when selecting the relevant information of the resource from the resource base 1 by the server, the search character received by the server is a number 9, then the names of the resources in the resource base 1 are encoded according to the input sequence of the 9-key number method, and if a resource with a code of "934x" exists, 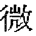 " x" of this resource is used as the relevant information of the resource matched with 9.

The server may also encode the names of the resources according to the above two methods before receiving the at least one search character. In this time, after receiving the at least one search character, the server may directly select the relevant information of the resource matched with the at least one search character from the resource base without the encoding procedure, which improves the efficiency of resource searching. In the present embodiment, the timing of encoding the relevant information of the resource by the server is not limited.

When there is no relevant information matched with the at least one search character in the resource base selected by the server, a resource base corresponding to another application program belonging to the same type with this application program is determined according to the identification, and the relevant information matched with the at least one search character is selected from the determined resource base.

For example, based on the corresponding relationship shown in the above Table 1, the application program corresponding to the identification received by the server is *xxshangdian 1*, then the server selects the relevant information of the resource matched with the at least one search character from the resource base 1, and if the relevant information of the resource matched with the at least one search character does not exist in the resource base 1, the server determines a resource base corresponding to an application program *xxshangdian* 2 having the same type according to the identification, i.e., the resource base 2. At this time, the server selects the relevant information matched with the at least one search character from the resource base 2.

In the present embodiment, when there is no relevant information matched with the at least one search character in the resource base selected by the server, the resource base corresponding to another application program of the same type is searched, such that the resource searched by the server is not limited to the resource base corresponding to the application program calling the input program, the range of resource searching is increased, and the success rate of resource searching is improved.

In step 309, when selecting relevant information of at least two resources, the server ranks respective relevant information according to an order of matching degrees between names of respective resources and the at least one search character from high to low.

The matching degree may be a search hot degree or a download hot degree of the resource, which is not limited by the present embodiment.

In step 310, the server may send the respective relevant information to the input program according to the ranked order.

Since the larger the matching degree with the search character is, the larger the possibility that the resource is the resource searched by the user is, the server ranks the respective relevant information according to an order of matching degrees between names of respective resources and the at least one search character from high to low, and sends the respective relevant information to the input program according to the ranked order, such that the input program first receives the relevant information of the resource having a higher matching degree from the resources matching with the search character, and the possibility that resource corresponding to the relevant information received by the input program is the resource needing to be searched by the user is improved.

In step 311, when relevant information of at least two resources are received, the input program receives the relevant information of respective resources which have been ranked, displays respective relevant information in turn according to the ranked order, and displays the relevant information in an adjacent area of a candidate word generated by the input program according to the at least one search character.

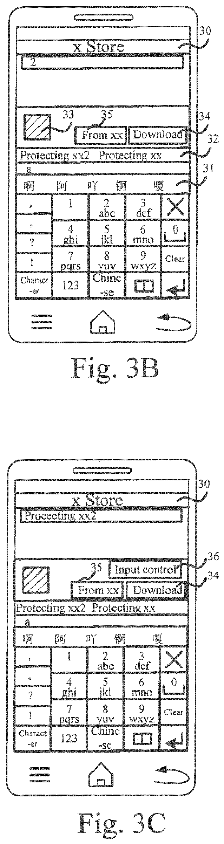

Referring to a schematic diagram shown in Fig. 3B in which the input program displays the relevant information, the input method set by the user is the 9-key number method, after the application program 30 calls the input program, a number 2 is input via the input program, and a candidate word 31 corresponding to the number 2 appears at an upper side of an input panel of the input program, and the relevant information received by the input program is a name 32 of the resource "Protecting xx2, Protecting xx", an icon 33 of the resource, a download address 34 of the resource, an address 35 of a resource base to which the resource belongs, wherein the above relevant information are all displayed in a region near the candidate word.

In the present embodiment, for example, the displaying sequence of the relevant information is: the icon of the resource and the name of the resource, and the relevant information is displayed at the upper side of list of the candidate words. In actual implementation, the displaying sequence of the relevant information, and the positional relationship between the relevant information and the list of the candidate words are not limited by the present embodiment.

Alternatively, when an input control is also displayed in a display area of the relevant information, it is detected whether a second operation instruction generated by triggering the input control by the user is received; and when the second operation instruction is received, the at least one search character is updated by using the name of the resource.

The second operation instruction is used for instructing the input program to input the name of the resource into the search bar of the application program calling the input program, the search bar including at least one search character.

For example, in a schematic diagram shown in Fig. 3C in which the input program displays the relevant information, an input control 36 is also displayed in the display area of the relevant information, and after the user triggers the input control, the search character 2 in the search bar is replaced by the name of the resource "Protecting xx2".

If the address of the resource base to which the resource belongs displayed by the input program indicates an other application program, when the user acquires the resource, the terminal may jump to the other application program to download the resource, and if there is no other application program installed in the terminal, the terminal needs to download the other application program first, and then jump to the other application program for downloading the resource. When the resource in the other application program is unsafe, it is possible that the user does not want to download the resource from the resource base corresponding to the other application program, instead, the user desires to download the resource from the resource base corresponding to the application program calling the input program. At this time, an input control may be provided in the display area of the relevant information. If the user triggers the input control, the input program inputs the name of the resource into the search bar, at this time, the server searches the resource in the resource base corresponding to the application program. In addition, since at least one search character may be updated by using the name of the resource, instead of inputting a complete name of the resource and then inputting it into the search bar, the input efficiency may be improved.

In step 312, when the relevant information includes the address of the resource, the input program detects whether a first operation instruction generated by triggering the address by the user is received.

The first operation instruction is used for instructing the input program to generate a resource acquiring request, the resource acquiring request being for requesting a resource from the server.

For example, in a schematic diagram shown in Fig. 3C in which the input program displays the relevant information, the input program detects whether a first operation instruction generated by triggering the download address 34 by the user is received.

In step 313, when the first operation instruction is received, the input program sends the resource acquiring request carrying the address to the server.

If the input program receives the first operation instruction, it indicates that the user needs to download the resource corresponding to the displayed relevant information, at this time, the input program sends the request acquiring request carrying the address to the server.

For example, in a schematic diagram shown in Fig. 3C in which the input program displays the relevant information, the user triggers the download address 34 of the resource, and the input program receives the first operation instruction and sends the resource acquiring request carrying the download address 34 and the address 35 of the resource base to the server.

In step 314, the server detects whether the resource acquiring request sent by the input program is received.

In step 315, when the resource base is a resource base corresponding to the application program calling the input program, the server sends the resource to the application program calling the input program; and when the resource base is a resource base corresponding to another application program, the server sends the resource to the other application program.

When it is detected by the server that the resource acquiring request sent by the input program is received, the resource is sent to the application program corresponding to resource base according to the download address and the address of the resource base to which the resource belongs.

The step of sending the resource to the application program corresponding to the resource base according to the download address and the address of the resource base to which the resource belongs includes:
when the resource base is a resource base corresponding to the application program calling the input program, the server sends the resource to the application program calling the input program. At this time, the application program calling the input program receives the resource.

For example, in a schematic diagram shown in Fig. 3C in which the input program displays the relevant information, the address 35 of the resource base indicates the application program 30. At this time, the application program 30 receives the resource sent by the server.

The step of sending the resource to the application program corresponding to the resource base according to the download address and the address of the resource base to which the resource belongs further includes:
when the resource base is a resource base corresponding to another application program, the server sends the resource to the other application program. At this time, the terminal starts and jumps to the other application program indicated by the address of the resource base, and the other application program receives the resource sent by the server.

For example, in a schematic diagram shown in Fig. 3C in which the input program displays the relevant information, the address 35 of the resource base does not indicate the application program 30. At this time, the terminal starts and jumps to another application program indicated by the address 35 of the resource base, and the other application program receives the resource sent by the server.

The step 301 to the step 304 and the step 311 to the step 313 may be separately implemented as the method embodiment at the input program side; and the step 305 to the step 310 and the step 314 to the step 315 may be separately implemented as the method embodiment at the server side. This is not limited in the present embodiment.

In sum, in the method for searching a resource provided by the present disclosure, by receiving at least one search character input by a user when an input program is called by an application program running in a foreground in a terminal; selecting by the server relevant information of a resource matched with the at least one search character from a resource base, and receving and providing the relevant information to the user, the user can find the resource needing to be searched by only inputting at least one search character when searching resources, without inputting a complete name of the resource needing to be searched in a search bar of the application program, which solves the problem of low resource searching efficiency found in systems in which, only when the user inputs a complete name of the resource in a search bar of the application program, does the server send the resource matched with the name to the application program, and achieves the effect of improving the resource searching efficiency.

In addition, by displaying the relevant information in an adjacent area of a candidate word, the user can conveniently process the relevant information.

In addition, by acquiring an identification of the application program calling the input program and sending the identification to the server, it is unnecessary for the server to search the relevant information of the resource from all the resource bases, instead, the server only needs to select the resource base corresponding to the identification from the at least one resource base, and select the relevant information matched with the search character from the selected resource base, which reduces the resource consumed by searching the relevant information matched with the search character via the server.

In addition, by ranking the resources matched with the search character according to the matching degrees via the server, and displaying the respective relevant information according to the ranked order via the input program, since the larger the matching degree with the search character is, the larger the possibility that the resource is the resource searched by the user is, the accuracy of displaying the relevant information can be improved by giving priority to displaying the relevant information of the resource having a higher matching degree.

In addition, when there is no relevant information matched with the search character in the selected resource base, a resource base corresponding to another application program which belongs to the same type as this application program is determined according to the identification; and the relevant information matched with the search character is selected from the determined resource base, in this way, when there is no resource searched by the user in the resource base corresponding to the application program calling the input program, a resource base corresponding to another application program of the same type may be searched, which solves the problem of the server not looping up the relevant information of the resource when there is no resource searched by the user in the resource base corresponding to the application program calling the input program, and achieves the effects of searching the resources cross platform and thus providing more resources to the user.

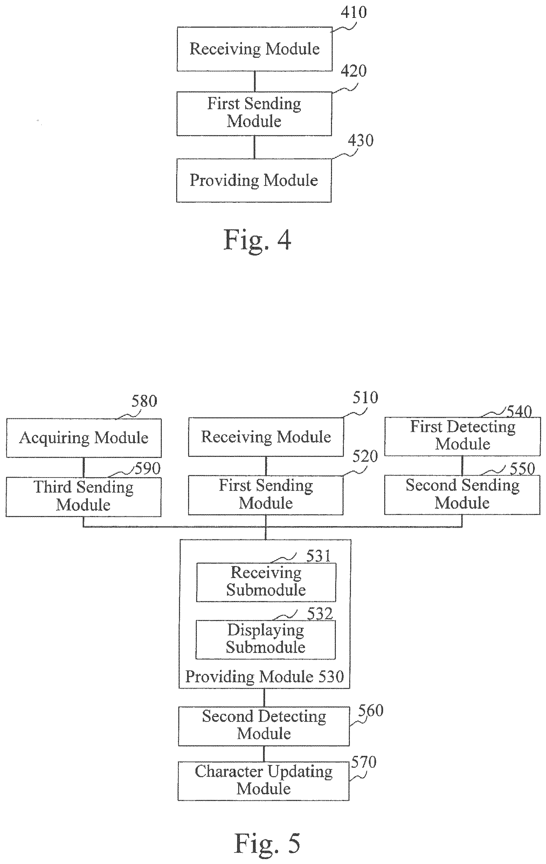

Fig. 4 is a block diagram illustrating an apparatus for searching a resource, according to an exemplary embodiment of the present disclosure. The apparatus for searching a resource is applied in an input program. As shown in Fig. 4, the apparatus for searching a resource includes: a receiving module 410, a first sending module 420, and a providing module 430.

The receiving module 410 is configured to receive at least one search character input by a user when an input program is called by an application program running in a foreground in a terminal.

The first sending module 420 is configured to send the at least one search character received by the receiving module 410 to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource.

The providing module 430 is configured to receive and provide the relevant information to the user.

In sum, in the apparatus for searching a resource provided by the present disclosure, by receiving at least one search character input by a user when an input program is called by an application program running in a foreground in a terminal; selecting by the server relevant information of a resource matched with the at least one search character from a resource base, and receiving and providing the relevant information to the user, the user can find the resource needing to be searched by only inputting at least one search character, without inputting a complete name of the resource needing to be searched in a search bar of the application program, which solves the problem of low resource searching efficiency found in systems in which, only when the user inputs a complete name of the resource in a search bar of the application program while searching resources, does the server send the resource matched with the name to the application program, and achieves the effect of improving the resource searching efficiency.

Fig. 5 is a block diagram illustrating an apparatus for searching a resource, according to another exemplary embodiment of the present disclosure. As shown in Fig. 5, the apparatus for searching a resource includes: a receiving module 510, a first sending module 520, and a providing module 530.

The receiving module 510 is configured to receive at least one search character input by a user when an input program is called by an application program running in a foreground in a terminal.

The first sending module 520 is configured to send the at least one search character received by the receiving module 510 to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource.

The providing module 530 is configured to receive and provide the relevant information to the user.

The providing module 530 may include: a receiving submodule 531 and a displaying submodule 532.

The receiving submodule 531 is configured to receive the relevant information.

The displaying submodule 532 is configured to display the relevant information received by the receiving submodule 531 in an interface of the input program.

The displaying submodule 532 may be further configured to:
display the relevant information in an adjacent area of a candidate word generated by the input program according to the at least one search character, the relevant information including at least a name of the resource and an address of the resource.

The apparatus may further include: a first detecting module 540 and a second sending module 550.

The first detecting module 540 is configured to, when the relevant information includes the address of the resource, detect whether a first operation instruction generated by triggering the address by the user is received.

The second sending module 550 is configured to, when the first detecting module 540 detects that the first operation instruction is received, send a resource acquiring request carrying the address to the server, the resource acquiring request being configured for requesting the resource from the server.

The apparatus may further include: a second detecting module 560 and a character updating module 570.

The second detecting module 560 is configured to, when an input control is also displayed in a display area of the relevant information, detect whether a second operation instruction generated by triggering the input control by the user is received.

The character updating module 570 is configured to, when the second detecting module 560 detects that the second operation instruction is received, update the at least one search character by using the name of the resource.

The displaying submodule 532 may be further configured to: when relevant information of at least two resources are received, receive the relevant information of respective resources which have been ranked, and display respective relevant information in turn according to the ranked order, the ranked order being obtained by ranking respective relevant information via the server according to an order of matching degrees between the names of respective resources and the at least one search character from high to low.

The apparatus may further include: an acquiring module 580 and a third sending module 590.

The acquiring module 580 is configured to acquire an identification of the application program calling the input program.

The third sending module 590 is configured to send the identification acquired by the acquiring module 580 to the server, the server being configured for selecting a resource base corresponding to the identification from at least one resource base, and selecting the relevant information matched with the at least one search character from the selected resource base.

In sum, in the apparatus for searching a resource provided by the present disclosure, by receiving at least one search character input by a user when an input program is called by an application program running in a foreground in a terminal; selecting by the server relevant information of a resource matched with the at least one search character from a resource base, and receiving and providing the relevant information to the user, the user can find the resource needing to be searched by only inputting at least one search character when searching resources, without inputting a complete name of the resource needing to be searched in a search bar of the application program, which solves the problem of low resource searching efficiency found in systems which, only when the user inputs a complete name of the resource in a search bar of the application program, does the server send the resource matched with the name to the application program, and achieves the effect of improving the resource searching efficiency.

In addition, by displaying the relevant information in an adjacent area of a candidate word, the user can conveniently operate the relevant information.

In addition, by acquiring an identification of the application program calling the input program and sending the identification to the server, it is unnecessary for the server to search the relevant information of the resource from all the resource bases, instead, the server only needs to select the resource base corresponding to the identification from the at least one resource base, and select the relevant information matched with the search character from the selected resource base, which reduces the resource consumed by searching the relevant information matched with the search character via the server.

In addition, by ranking the resources matched with the search character according to the matching degrees via the server, and displaying the respective relevant information according to the ranked order via the input program, since the larger the matching degree with the search character is, the larger the possibility that the resource is the resource searched by the user is, the accuracy of displaying the relevant information can be improved by giving priority to displaying the relevant information of the resource having a higher matching degree.

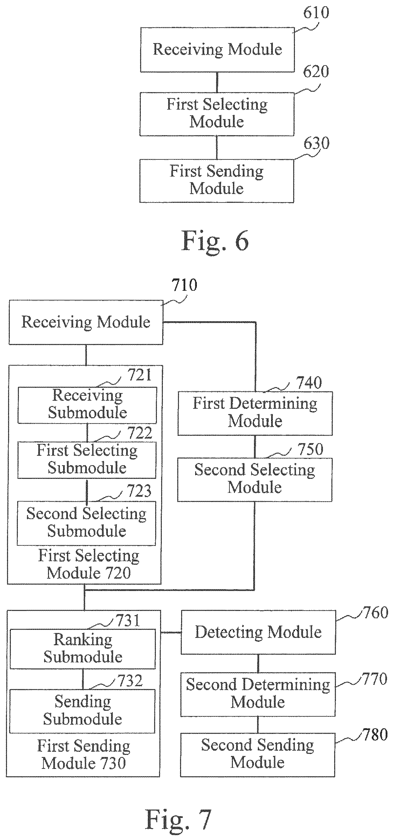

Fig. 6 is a block diagram illustrating an apparatus for searching a resource, according to an exemplary embodiment of the present disclosure. The apparatus for searching a resource is applied in a server. As shown in Fig. 6, the apparatus for searching a resource includes: a receiving module 610, a first selecting module 620 and a first sending module 630.

The receiving module 610 is configured to receive at least one search character sent by an input program, the at least one search character being received when the input program is called by an application program running in a foreground in a terminal.

The first selecting module 620 is configured to select relevant information of a resource matched with the at least one search character received by the receiving module 610 from a resource base, the resource base being configured for storing the resource and the relevant information of the resource, and the relevant information being configured for a user to identify and acquire the resource.

The first sending module 630 is configured to send the relevant information selected by the first selecting module 620 to the input program, the input program being configured for providing the relevant information to the user.

In sum, in the apparatus for searching a resource provided by the present disclosure, by selecting by the server relevant information of a resource matched with the received at least one search character from a resource base, and receiving and providing the relevant information to the user, the user can find the resource needing to be searched by only inputting at least one search character, without inputting a complete name of the resource needing to be searched in a search bar of the application program, which solves the problem of low resource searching efficiency found in systems in which, only when the user inputs a complete name of the resource in a search bar of the application program while searching resources, does the server send the resource matched with the name to the application program, and achieves the effect of improving the resource searching efficiency.

Fig. 7 is a block diagram illustrating an apparatus for searching a resource, according to another exemplary embodiment of the present disclosure. The apparatus for searching a resource is applied in a server. As shown in Fig. 7, the apparatus for searching a resource includes: a receiving module 710, a first selecting module 720 and a first sending module 730.

The receiving module 710 is configured to receive at least one search character sent by an input program, the at least one search character being received when the input program is called by an application program running in a foreground in a terminal.

The first selecting module 720 is configured to select relevant information of a resource matched with the at least one search character received by the receiving module 710 from a resource base, the resource base being configured for storing the resource and the relevant information of the resource, and the relevant information being configured for a user to identify and acquire the resource.

The first sending module 730 is configured to send the relevant information selected by the first selecting module 720 to the input program, the input program being configured for providing the relevant information to the user.

The first selecting module 720 may include: a receiving submodule 721, a first selecting submodule 722 and a second selecting submodule 723.

The receiving submodule 721 is configured to receive an identification of the application program calling the input program sent by the input program.

The first selecting submodule 722 is configured to select a resource base corresponding to the identification received by the receiving submodule 721 from the at least one resource base.

The second selecting submodule 723 is configured to select the relevant information matched with the at least one search character from the resource base selected by the first selecting submodule 722.

The apparatus may further include: a first determining module 740 and a second selecting module 750.

The first determining module 740 is configured to, when there is no relevant information matched with the at least one search character in the selected resource base, determine a resource base corresponding to another application program which belongs to the same type as this application program according to the identification.

The second selecting module 750 is configured to select the relevant information matched with the at least one search character from the resource base determined by the first determining module 740.

The apparatus may further include: a detecting module 760, a second determining module 770 and a second sending module 780.

The detecting module 760 is configured to detect whether a resource acquiring request sent by the input program is received, the resource acquiring request being generated by triggering an address of the resource displayed in an interface of the input program by the user of the input program, the resource acquiring request being configured for requesting the resource from the server.

The second determining module 770 is configured to, when the detecting module 760 detects that the resource acquiring request is received, determine a resource base corresponding to the address.

The second sending module 780 is configured to, when the resource base determined by the second determining module 770 is the resource base corresponding to the application program calling the input program, send the resource to the application program calling the input program; and when the resource base is the resource base corresponding to another application program, send the resource to the other application program.

The first sending module 730 may include: a ranking submodule 731 and a sending submodule 732.

The ranking submodule 731 is configured to, when selecting the relevant information of at least two resources, rank respective relevant information according to an order of matching degrees between names of respective resources and the at least one search character from high to low.

The sending submodule 732 is configured to send the respective relevant information to the input program according to the order ranked by the ranking submodule 731.

In sum, in the apparatus for searching a resource provided by the present disclosure, by selecting by the server relevant information of a resource matched with the at least one search character from a resource base, and receiving and providing the relevant information to the user, the user can find the resource needing to be searched by only inputting at least one search character when searching resources, without inputting a complete name of the resource needing to be searched in a search bar of the application program, which solves the problem of low resource searching efficiency found in systems in which, only when the user inputs a complete name of the resource in a search bar of the application program, does the server send the resource matched with the name to the application program, and achieves the effect of improving the resource searching efficiency.

In addition, the server receives an identification of the application program calling the input program acquired by the input program, such that it is unnecessary for the server to search the relevant information of the resource from all the resource bases, instead, the server only needs to select the resource base corresponding to the identification from the at least one resource base, and select the relevant information matched with the search character from the selected resource base, which reduces the resource consumed by searching the relevant information matched with the search character via the server.

In addition, by ranking the resources matched with the search character according to the matching degrees via the server, and displaying the respective relevant information according to the ranked order via the input program, since the larger the matching degree with the search character is, the larger the possibility that the resource is the resource searched by the user is, the accuracy of displaying the relevant information can be improved by giving priority to displaying the relevant information of the resource having a higher matching degree.

In addition, when there is no relevant information matched with the search character in the selected resource base, a resource base corresponding to another application program which belongs to the same type as this application program is determined according to the identification; and the relevant information matched with the search character is selected from the determined resource base, in this way, when there is no resource searched by the user in the resource base corresponding to the application program calling the input program, a resource base corresponding to the other application program having the same type may be searched, which solves the problem of the server not looping up the relevant information of the resource when there is no resource searched by the user in the resource base corresponding to the application program calling the input program, and achieves the effects of searching the resources cross platform and thus providing more resources to the user.

With respect to the device in the above embodiments, the specific manners for performing operations for individual modules therein have been described in detail in the embodiments regarding the methods, which will not be elaborated herein.

An exemplary embodiment of the present disclosure provides an apparatus for searching a resource, being capable of achieving the method for searching a resource provided by the present disclosure, including: a processor; and a memory for storing instructions executable by the processor;
wherein the processor is configured to:
receive at least one search character input by a user when an input program is called by an application program running in a foreground in a terminal;
send the at least one search character to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource; and
receive and provide the relevant information to the user.

An exemplary embodiment of the present disclosure provides an apparatus for searching a resource, being capable of achieving the method for searching a resource provided by the present disclosure, including: a processor; and a memory for storing instructions executable by the processor;
wherein the processor is configured to:
receive at least one search character sent by an input program, the at least one search character being received when the input program is called by an application program running in a foreground in a terminal;
select relevant information of a resource matched with the at least one search character from a resource base, the resource base being configured for storing the resource and the relevant information of the resource, and the relevant information being configured for a user to identify and acquire the resource; and
send the relevant information to the input program, the input program being configured for providing the relevant information to the user.

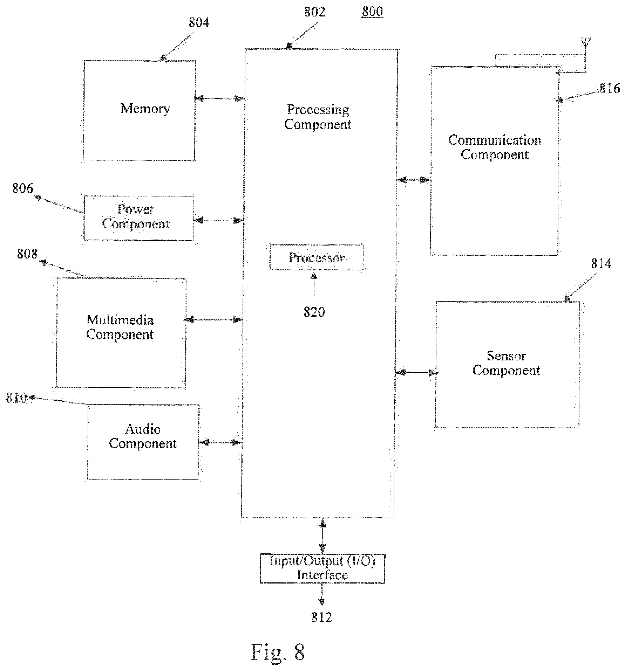

Fig. 8 is a block diagram illustrating an apparatus 800 suitable for searching a resource, according to an exemplary embodiment of the present disclosure.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 may further include a loudspeaker for outputting the audio signal.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

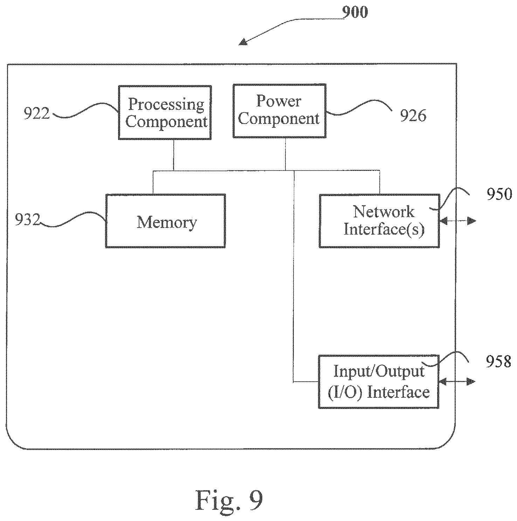

FIG. 9 is a block diagram of a device 900 for searching a resource, according to an exemplary embodiment. For example, the device 900 may be provided as a server. Referring to FIG. 9, the device 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform the above described method for searching a resource.

The device 900 may also include a power component 926 configured to perform power management of the device 900, wired or wireless network interface(s) 950 configured to connect the device 900 to a network, and an input/output (I/O) interface 958. The device 900 may operate based on an operating system stored in the memory 932, such as Windows Server^{™}, Mac OS X^{™}, Unix^{™}, Linux^{™}, FreeBSD^{™}, or the like.

## Claims

1. A method for searching a resource, applied in an input program, wherein the method comprises:
receiving (201, 301) at least one search character input by a user when the input program is called by an application program running in a foreground in a terminal;
sending (202) the at least one search character to a server, the server being configured for selecting (204) relevant information of a resource matched with the at least one search character from a resource base, and sending (205) the relevant information to the input program, the resource base being configured for storing the resource and the relevant information of the resource, the relevant information being configured for the user to identify and acquire the resource; and
receiving and providing (203) the relevant information to the user.

2. The method of claim 1, wherein the receiving and providing (203) the relevant information to the user comprises:
receiving the relevant information; and
displaying the relevant information in an interface of the input program.

3. The method of claim 2, wherein the displaying the relevant information in the interface of the input program comprises:
displaying the relevant information in an adjacent area of a candidate word generated by the input program according to the at least one search character, the relevant information comprising at least a name of the resource and an address of the resource.

4. The method of claim 2, further comprising:
when relevant information of at least two resources are received, receiving the relevant information of respective resources which have been ranked, and displaying respective relevant information in turn according to the ranked order (311), the ranked order being obtained by ranking respective relevant information via the server according to an order of matching degrees between the names of respective resources and the at least one search character from high to low.

5. A method for searching a resource, applied in a server, wherein the method comprises:
receiving (203, 305) at least one search character sent by an input program, the at least one search character being received when the input program is called by an application program running in a foreground in a terminal;
selecting (204) relevant information of a resource matched with the at least one search character from a resource base, the resource base being configured for storing the resource and the relevant information of the resource, and the relevant information being configured for a user to identify and acquire the resource; and
sending (205) the relevant information to the input program, the input program being configured for providing the relevant information to the user.

6. The method of claim 5, wherein the selecting (204) relevant information of the resource matched with the at least one search character from a resource base comprises:
receiving (306) an identification of the application program calling the input program sent by the input program;
selecting (307) a resource base corresponding to the identification from at least one resource base; and
selecting (308) the relevant information matched with the at least one search character from the selected resource base.

7. An apparatus for searching a resource, applied in an input program, wherein the apparatus comprises:
a receiving module (410, 510) configured to receive at least one search character inputinput by a user when the input program is called by an application program running in a foreground in a terminal;
a first sending module (420, 520) configured to send the at least one search character received by the receiving module (410, 510) to a server, the server being configured for selecting relevant information of a resource matched with the at least one search character from a resource base, and sending the relevant information to the input program, the resource base being configured for storing the resource and the relevant information of the resource, the relevant information being configured for the user to identify and acquire the resource; and
a providing module (430, 530) configured to receive and provide the relevant information to the user.

8. The apparatus of claim 7, wherein the providing module (430, 530) comprises:
a receiving submodule (531) configured to receive the relevant information; and
a displaying submodule (532) configured to display the relevant information received by the receiving submodule (531) in an interface of the input program.

9. The apparatus of claim 8, wherein the displaying submodule (532) is further configured to:
display the relevant information in an adjacent area of a candidate word generated by the input program according to the at least one search character, the relevant information comprising at least a name of the resource and an address of the resource.

10. The apparatus of claim 8, wherein the displaying submodule (532) is further configured to:
when relevant information of at least two resources are received, receive the relevant information of respective resources which have been ranked, and display respective relevant information in turn according to the ranked order, the ranked order being obtained by ranking respective relevant information via the server according to an order of matching degrees between the names of respective resources and the at least one search character from high to low.

11. An apparatus for searching a resource, applied in a server, wherein the apparatus comprises:
a receiving module (610, 710) configured to receive at least one search character sent by an input program, the at least one search character being received when the input program is called by an application program running in a foreground in a terminal;
a first selecting module (620, 720) configured to select relevant information of a resource matched with the at least one search character received by the receiving module (610, 710) from a resource base, the resource base being configured for storing the resource and the relevant information of the resource, and the relevant information being configured for a user to identify and acquire the resource; and
a first sending module (630, 730) configured to send the relevant information selected by the first selecting module (620, 720) to the input program, the input program being configured for providing the relevant information to the user.

12. The apparatus of claim 10, wherein the first selecting module (620, 720) comprises:
a receiving submodule (721) configured to receive an identification of the application program calling the input program sent by the input program;
a first selecting submodule (722) configured to select a resource base corresponding to the identification received by the receiving submodule (721) from at least one resource base; and
a second selecting submodule (723) configured to select the relevant information matched with the at least one search character from the resource base selected by the first selecting submodule.
